# EUROPEAN PATENT APPLICATION

(11) **EP 1 903 458 A1**
(43) Date of publication of application: **26.03.2008**
(21) Application number: 07116702.7
(22) Date of filing: 19.09.2007
(51) Int. Cl.: G06F 17/30

(54) **Method for finding Web services described by respective semantic descriptions in different languages or forms**

(30) Priority: 21.09.2006 FR 0653851
(71) Applicant: Alcatel Lucent, 75008 Paris (FR)
(72) Inventor: Larvet, Philippe, 91470 Forges les Bains (FR)
(74) Representative: Sciaux, Edmond

(57) **Abstract**

The invention relates to a semantic referential (40) of Web services (11-14), comprising a unique metamodel for semantic description of those services (11-14).
It also concerns a method (S300-S400) of creating that semantic referential (40) and a method for semantic discovery of a Web service as a function of a semantic request (S500).
The invention further concerns a computer program product and an electronic data processing system comprising code means adapted to implement the steps of the method of the invention.

## Description

The present invention concerns Web services in general, and enquiries concerning such services.

In the present description, the following terms are employed with the meaning indicated, unless specifically mentioned:
- "UDDI (Universal Description Discovery and Integration) directory" designates an XML-based directory more particularly dedicated to Web services, especially in the context of SOA (Service Oriented Architecture) type architectures. There exist private and public directories, directories specific to certain service providers. A UDDI directory is used to locate a required Web service in the network. It comprises in particular Web service access information and contextual information, for example a brief description of the services and their functions. The UDDI directory contains in particular:

- white pages comprising information relating to businesses;
- yellow pages, which list the Web services of those businesses to the WSDL standard; and
- green pages providing precise technical information on the services provided. This technical information covers, among other things, descriptions of services, connections or associated trade processes.
- "Ontology": an ontology is a structured set of concepts organized into a graph the relations whereof can be semantic relations or relations of composition and inheritance (in the object sense). An objective of an ontology is to model a set of knowledge in a given domain.
- "OWL" is a Web ontology language designed for applications that must not only present users with information but also process the content thereof. OWL is an XML "dialect" based on an RDF (Resource Description Framework) syntax, which designates a graph model for describing metadata and for some automatic processing of that metadata. OWL provides means for defining structured Web ontologies. OWL offers machines greater capacities for interpreting Web content than usual, for example using XML, thanks to a supplementary vocabulary and a formal semantic. OWL is made up of three sub-languages offering increasing expressivity: OWL Lite (or OWL), OWL DL and OWL Full. OWL-S (where S stands for "semantic") is "semantic" oriented, as yet exists only as a proposal and has not been standardized.
- "Input parameter" designates data supplied at the input to a processing operation of a Web service; the input data of the operation is transformed by the operation to provide the output result.
- "Output result" designates the information resulting from the processing effected by an operation of a Web service on its input data (or "input parameters"). The output result is the product expected by the user of the Web service, which user can be an electronic data processing application or another Web service.
- "Web service" designates an application accessible on the INTERNET, via a standard interface, that can interact dynamically with applications or other Web services using communication protocols, for example based on XML, independently of the operating system and the programming languages used. At the level of its interfaces as such, a Web service comprises processing operations that supply results based on input data or "input parameters". To use a Web service, one of its operations is called and supplied with the expected input data and the output result is recovered.
- "UML" (Unified Modeling Language): designates a notation (rather than a language) for modeling by means of objects, used to determine and to present the components of an object system during its development, and where applicable to generate its documentation. UML is currently the OMG standard. It results from merging the work of Jim Rumbaugh, Grady Booch and lvar Jacobson, and has evolved in numerous ways.
- "Semantic Web" designates an extension of the World Wide Web used to publish, consult and above all automate the processing of formalized knowledge, which means that documents processed by the Semantic Web contain, instead of texts in natural language, formalized information to be processed automatically.
- "WSDL" is a language standardized by the W3C (release 1.1 of 15 March 2001 - see http://www.w3.org/TR/wsdl), with particular reference to the XML language. WSDL describes a public access interface to a Web service by the following elements: service name, operations, types of data manipulated and links between those types and the operations. WSDL also indicates how to communicate in order to use the service, the communication protocol and the message format required to communicate with the service. Like OWL-S, WSDL-S is "semantic" oriented but is not yet standardized.
- "WSMO (Web Service Modeling Ontology)" designates an ontology aiming to describe services of the Semantic Web "semantically".
- "XML" (extensible Markup Language): an evolution of the SGML language, which is used in particular by HTML document designers to define their own markers, with the aim of personalizing the data structure.

Modern telecommunication technologies, in particular the Internet, enable users to access a variety of services quickly. In this field, the Semantic Web is growing fast, especially where applications for developing services with the aid of existing services, using a semantic approach, are concerned. More and more Web services are provided with an ontology or, more generally, a semantic description. In this context, a problem that arises is being able easily to find a given "semantic service" (i.e. a service with a semantic description) that constitutes a pertinent response to a given semantic enquiry, i.e. an enquiry containing semantic information.

A known solution to this problem consists in syntactically analyzing the content of a service directory, finding and then extracting the semantic description of each service, and finally searching that description for a match with the semantic enquiry. In practice, this solution must take account of the fact that the semantic descriptions or the ontologies of the services can take different forms and can be written using languages of different types, for example OWL, OWL-S, WSDL-S, WSMO, UML, etc. Consequently, a specific analyzer (parser) is necessary for each service type/form in order to extract the useful semantic information therefrom.

This solution is not satisfactory, however, because it represents a heavy management load and degrades the response times perceived by the user. In particular, for each request, it necessitates analyzing the whole of the content of the service directory and examining all of the data contained in the various forms of semantic descriptions of the services.

There is therefore a need for a solution that significantly simplifies the search for semantic services and reduces the processing time that this search represents.

To this end, the invention proposes a Web service semantic referential comprising a unique metamodel for semantic description of the services.

Preferred embodiments of the semantic referential of the invention have one or more of the following features:
- the referential is structured by operations each comprising a semantic description of an operation of a particular Web service;
- the referential according to the invention takes the form of a file with no pointers to the outside of the file, which comprises one line per operation, for example;
- the semantic description of each of the operations comprises information on the goal of the operation of the associated particular Web service, the quality of service of the operation of the Web service and the context of use of the operation of the Web service;
- the semantic description of each of the operations further comprises semantic information associated with the input and output parameters.

The invention also proposes a method comprising a step of supplying the semantic referential according to the invention.

Preferred embodiments of the method of the invention have one or more of the following features:
- the method of the invention further comprises an initial step of creation or updating of the referential;
- the referential creation step comprises steps of supplying heterogeneous semantic descriptions of the Web services and for each of the Web services: selecting a syntactical analyzer adapted to a type of semantic description of that service, extracting semantic description characteristics by means of the selected syntactical analyzer and converting and storing these semantic description characteristics in accordance with the unique metamodel;
- in the step of supplying the heterogeneous semantic descriptions of the Web services, the latter are supplied as and when those Web services are created;
- the method according to the invention further comprises the steps of receiving a semantic enquiry, semantically analyzing the received enquiry and transcribing a result of that analysis in accordance with said metamodel and searching for a Web service operation in said referential using the transcribed result;
- the semantic analysis and transcription step is implemented by a semantic discovery mechanism;
- the enquiry received in the reception step is an enquiry in natural language.

The invention further concerns a computer program product adapted to execute the steps of the method of the invention and an electronic data processing system comprising code means adapted to execute the steps of the method of the invention.

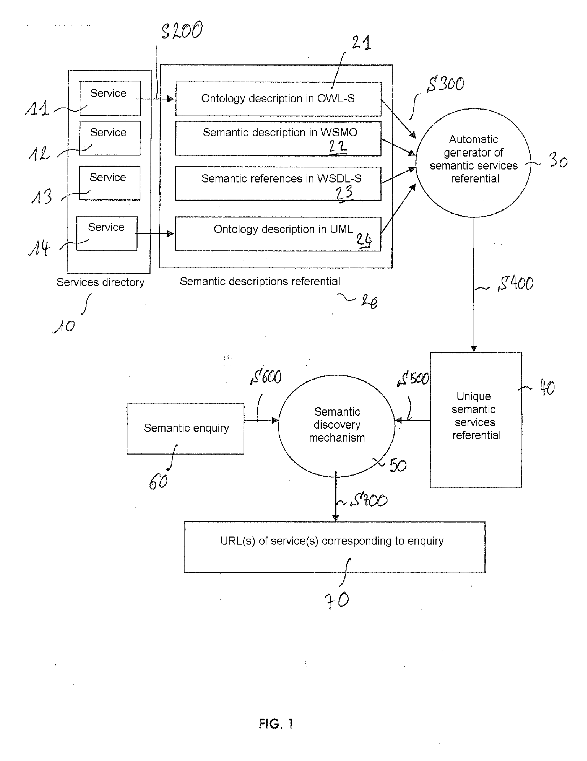

Other features and advantages of the invention will become apparent on reading the following detailed description of embodiments of the invention, given by way of example only and with reference to examples and to the appended drawing (single figure), which illustrates the steps and components of one embodiment of a method of the invention.

The basic idea of the invention is to produce a unique semantic referential of services, to facilitate searching for services and to reduce the time taken by that search. Thus the invention proposes a Web service referential grouping in a unique metamodel semantic descriptions that are initially heterogeneous (i.e. at least two of the services have different descriptions). This unique semantic service description metamodel therefore provides for the same semantic description mode to be used for each of the services. Searching for a service corresponding to a semantic request is facilitated and shortened because it is reduced to a search in a unique referential that contains the useful semantic information. Previously, the search was effected by consulting scattered semantic descriptions without a homogeneous format. Rather than extracting useful information with the aid of different forms of semantic description, a single metamodel is used here, which improves search performance.

The semantic service referential can therefore be seen as a new intermediary that simplifies and shortens searching for services.

The semantic referential of the invention is preferably structured by operations. By "operation" is meant a modeling element such as that of the same name in UML. Each of these operations comprises a semantic description of an operation of a particular Web service assuring that operation. More precisely, at the practical level, an operation can comprise a semantic description of a public processing function of a Web service. Such a referential structure proves advantageous from the point of view of its objective: being able to find easily a Web service with satisfactory processing performance. Now, a semantic enquiry in this sense will be expressed in a manner (semantically) close to the characteristics of the required operation(s) of the service. Thus structuring the referential according to the various operations in the directory enables coherent and therefore, in the final analysis, more efficient searching of the referential.

This semantic referential preferably takes the form of a unique file, with no pointer or reference to the outside (it contains the useful semantic information). As a result, it is self-sufficient. It is therefore not necessary, when a program scans the referential in order to deal with an enquiry, to call on external information, for example ontologies to which the referential might point. This further improves the efficiency of the service search.

In practice, a line of the referential can be dedicated to a given operation, for example.

Note that, where appropriate, the referential can be generated or updated automatically from the different forms of semantic description, each time that a new service is listed in the directory.

In more detail, the semantic description of each of the operations can for example comprise information relating to the goal of the associated Web service, the quality of service (QoS) and the context of use of the service. The operations can contain keywords corresponding to this semantic information and values or content associated with those keywords. The semantic content subtended by this information defines the useful semantic content efficiently.

Similarly, a line of the referential relating to a given operation can for example contain information relating to input parameters and/or output results of that operation, in order to be able to characterize the operation semantically at an earlier stage.

Keywords relating to the goal, to the quality of service or to the context of use of a service can further be treated in the same way as a semantic tag which can also, if appropriate, be associated with an input parameter or a result of the operation. Here a semantic tag can be seen as a name, a group of characters or more generally a code associated with a data item and serving to characterize it further semantically (for example, the "language" tag can be associated with the data processed by a translation Web service). Note that, semantically, the value of this tag exceeds what can be extracted directly from a standard WSDL (for example) description of a service. On the other hand, such information can be extracted from a semantic description of a service or an ontology.

Other information can be present, if appropriate, such as the data "type", that "type" here being comparable to the elements with the same name present in the WSDL description of a service.

Note that diverse forms of the semantic referential metalmodel can be envisaged, depending on how it is required to match the enquiry semantically with a service from the referential. The examples given hereinabove constitute as many means for efficiently structuring the semantic metamodel.

The single figure illustrates steps and components of one embodiment of the method of the invention.

Referring to that figure, the components involved are as follows:
- a service directory 10 listing various Web services 11 - 14;
- a referential 20 of semantic descriptions 21 - 24, which are typically descriptions available at a given URL;
- an automatic generator 30 of the unique semantic referential;
- the semantic referential 40 itself;
- a semantic discovery mechanism 50;
- a semantic request 60, typically sent from a PDA, a computer or a mobile telephone, etc.; and
- the URLs of the service(s) corresponding to the enquiry.

In one embodiment, the above components 10, 20, 30 are involved in the creation of the referential 40.

There is described next a method for creating the semantic referential 40. To summarize it, this method is compared to an automatic creation process during which all the useful information is extracted from the semantic descriptions 21 - 24. The information extracted is then organized, structured and written into a file that constitutes this referential 40.

Now in more detail: the descriptions 21 - 24 in question are accessible via the services directory 10, for example. The directory 10 is a UDDI directory, for example, which can where appropriate contain links or pointers to the descriptions 21 - 24 (generally heterogeneous), available at a given address.

For example, a semantic description of a translation service can take the following form (using the XML notation):

```
 <service name="Translation">
 <url>http://my_host/services/TranslationService/Translator.asmx</url>
 <semantics>
   <class>...</class>
   <subclassOf>...</subclassOf>
   <partOf>...</partOf>
   <concepts>...</concepts>
   <...>
 </semantics>
 <types></types>
 <operation name="Translate">
  <input>
   <param name="src_lang" type="string" semanticTag="language" />
   <param name="dest_lang" type="string" semanticTag="language" />
   <param name="text_to_tr" type="string" semanticTag="text" />
  </input>
  <output>
   <result name="translated_text" type="string" semanticTag="text" />
  </output>
 </operation>
 </service>
```

Although this description uses an XML notation, it differs from a simple XML description of a service. In fact, as can be seen in this example, the tag "semanticTag" here adds semantic information (language, text) going beyond what it is possible to extract from a standard XML description of a service. The above description is therefore indeed a "semantic" description. The semantic information is what will subsequently enable the matching of a "semantic" enquiry to a particular service, thanks to the referential 40.

Other information, present for example in the original description of a service expressed in WSDL-S, is not indispensable for the generation of the semantic referential, on the other hand; this refers for example to the references of the ontologies or of the types of data used, information linked to pre-conditions or post-conditions linked to the operations, etc. The information contained in the original description is therefore filtered to adjust the content of the semantic referential 40 to just the content useful for the enquiries 60.

From the various semantic descriptions 21 - 24 of the services listed in the directory 10, the principal semantic information is extracted (step S300) by means of a dedicated analyzer, which is selected beforehand as a function of the type of the semantic description 21 - 24.

The extracted information is then converted (step S300) and stored (step S400) in accordance with the unique metamodel specific to the semantic referential 40. It is then placed in the file constituting that referential 40. That file can take the following form, for example:

```
 <referential name="Semantic Services Referential">
  <service name="Translator">
 <url>http://my_host/services/TranslationService/Translator.asmx</url>
    <operation name="Translate">
     <semantics> main semantic concepts of the operation </semantics>
    </operation>
  </service>
  <service name="RSS_Service">
  <url>http://other_host/www_serv/RSS_Service/RSS_Service.asmx</url>
    <operation name="GetTitles">
     <semantics> main semantic concepts of the operation </semantics>
    </operation>
  </service>
  <service name="Traffic">
   <url>http://another_host/inet_serv/TrafficService/Traffic.asmx</url>
    <operation name="Getlnfos">
     <semantics> main semantic concepts of the operation </semantics>
    </operation>
  </service>
  <service name="...">
   <url>...</url>
    <operation name="...">
     <...>
  </referential>
```

As can be seen in the above example, described using the XML notation, the file of the semantic referential 40 is structured by operations (translation, RSS service, traffic, etc.), each comprising a semantic description ("main semantic concepts") of a specific operation of a particular Web service 11 - 14. These descriptions are not explained in this example, however, for reasons of intelligibility. In particular, the goal, quality of service, context of use, input/output information is not developed. Nevertheless, each semantic description, reduced to what is strictly necessary, is entirely included within the referential, which takes the form of a file with no external pointers.

The same program (the generator 30) can be designed to perform all the steps S300 - S400 of creating the referential 40.

Although the referential can be constructed or updated all at once (i.e. by processing all the Web services to be referenced therein), the referential can instead be fed "in batch mode" (i.e. offline) at the time of the creation of a service or shortly thereafter. This can prove advantageous where the Web service search is concerned, for example following an enquiry. In fact, the semantic referential of the invention can respond to a semantic enquiry by a simple process to be described next. That process includes the following steps. First of all, a semantic request 60 is received (step S600), and is analyzed, semantically, and then transcribed according to the metamodel specific to the referential 40. There follows the search (step S500) for the operation(s) of the Web service(s) 11 - 14 corresponding to the enquiry. For this purpose the referential 40 is interrogated and an attempt is made to match "semantically" (step S500) the enquiry (as analyzed and transcribed) with the semantic information available in the referential.

Once a service operation has been found (i.e. has been semantically matched with the enquiry), the user who originated the enquiry can be redirected to the corresponding URL 70, for example (step S700). It can therefore be considered that at this stage the enquiry 60 has been dealt with. Other mechanisms for making found service(s) available can naturally be envisaged, for example composition (aggregation) of those services, to produce a new service that the user would perceive as a unique service matching his initial enquiry.

The semantic analysis of the enquiry, its transcription and, where applicable, the search S500 for a match, can be conducted by the same semantic discovery mechanism 50. This semantic mechanism 50 is preferably implemented in an "integrated" electronic data processing tool such as an assistant or an application comprising a plurality of coupled software modules, each of those modules being assigned to a given task. Note further that the discovery mechanism can be implemented on the client or server side.

The search for a service corresponding to the semantic enquiry is facilitated by the fact that it is effected in the unique referential file. Moreover, given that the latter file contains all the useful information, execution of the semantic discovery mechanism can only be better and faster, especially as the referential has a unique structure. The response times are therefore very short, compared to those of the known solutions. In fact it is no longer necessary to extract the useful information from different forms of semantic description to process each semantic enquiry.

Furthermore, to facilitate access to "rich" semantic services, this referential 40 could be accessed by each operator or service provider seeking to provide semantic services and make them available to their customers (internal or external).

The variant described above, in which the referential is fed "in batch mode" (or offline) at the time of creating a service or shortly afterwards is referred to again now. This variant is advantageous where the Web service search is concerned. In fact, as explained above, Web services are preferably discovered "in real time". It is therefore preferable for the semantic referential to be updated, for example by the developer of the service, on each creation of a new service or shortly afterwards. Consequently, the transformation of the initial semantic description of the service into the unique description of the referential can be effected at the time the service is created or shortly afterwards, instead of being done during the search. The search time for the description and the time for its transformation are therefore not consumed at the time of the discovery of the service, since the search mechanism works on a unique referential, the effect of which is to improve the response times and processing performance at the time of semantic discovery of the services.

The "semantic" aspect, omnipresent in the preceding description, offers many applications that the person skilled in the art will easily be able to determine. For example, it means that enquiries expressed in natural language can be envisaged. Various techniques for semantic analysis of texts in natural language are known. Nouns, their respective definitions and relations between them are typically extracted or deduced from the enquiry. Dictionaries and a grammatical analysis are used for this, as is known in the art. The enquiry can emanate from a user of an IP terminal (mobile telephone, personal digital assistant, pocket PC, etc.), for example. Other variants can be envisaged, such as creation of a Web service as a result of such an enquiry. For this purpose, a semantic analysis of the enquiry (which is expressed in natural language, for example) is followed by an identification of Web service requirements as a function of that analysis, and the Web services are finally determined and sequenced as a function of the requirements identified. Where appropriate, once sequenced, those Web services can be orchestrated.

## Claims

1. Method for finding at least one Web service from a plurality of Web services (11 - 14) described by respective semantic descriptions, in different forms or different languages, the service to be found having to constitute a response to a given enquiry, containing semantic information;
**characterized in that** it comprises the following steps:
- starting from the descriptions of said services, creating or updating a semantic referential (40) grouping semantic information describing said services in accordance with a unique semantic service description metamodel; and
- when an enquiry is received:
-- semantically analyzing said enquiry (S600) and transcribing it according to said unique metamodel;
-- then interrogating (S500) said unique referential (40), seeking to match semantically the enquiry, as analyzed and transcribed according to said unique metamodel, with semantic information available in said referential (40), and thus identifying at least one service constituting a response to said enquiry.

2. Method according to claim 1, wherein the referential (40) is structured by operations each comprising a semantic description of an operation of a particular Web service (11 - 14).

3. Method according to claim 2, taking the form of a file with no pointers to the outside of the file, which comprises one line per operation, for example.

4. Method according to claim 3, wherein the semantic description of each of the operations comprises information on:
- the goal of the operation of the associated particular Web service (11 - 14);
- the quality of service of the operation of the Web service (11 - 14); and
- the context of use of the operation of the Web service (11 - 14).

5. Method according to claim 2, wherein the semantic description of each of the operations further comprises semantic information associated with the input and output parameters.

6. Method according to claim 5, wherein the referential creation step comprises step of:
- supplying heterogeneous semantic descriptions (21 - 24) of the Web services (11 - 14); and
- for each of the Web services (11 - 14):
- selecting a syntactical analyzer adapted to a type of semantic description of that service (11 - 14);
- extracting (S200) semantic description characteristics by means of the selected syntactical analyzer; and
- converting (S300) and storing (S400) these semantic description characteristics in accordance with the unique metamodel.

7. Method according to claim 6 wherein, in the step of supplying the heterogeneous semantic descriptions (21 - 24) of the Web services (11 - 14), the latter are supplied as and when those Web services are created.

8. Method according to claim 4, further comprising the steps of:
- receiving (S600) a semantic enquiry (60);
- semantically analyzing the received enquiry and transcribing a result of that analysis in accordance with said metamodel;
- searching (S500) for an operation of a Web service (11 - 14) in said referential (40) using the transcribed result.

9. Method according to claim 8, wherein the semantic analysis and transcription step is implemented by a semantic discovery mechanism (50).

10. Method according to claim 8, wherein the enquiry (60) received in the reception step (S600) is an enquiry (60) in natural language.

11. Computer program product adapted to implement the steps of the method according to any one of claims 1 to 10.

12. Electronic data processing system comprising code means adapted to execute the steps of the method according to any one of claims 1 to 10.

13. Use of a semantic referential (40) of Web services comprising a unique Web service semantic description metamodel to find automatically at least one Web service among a plurality of Web services.
